# EUROPÄISCHE PATENTSCHRIFT

(11) **EP 3 005 444 B1**
(45) Veröffentlichungstag und Bekanntmachung des Hinweises auf die Patenterteilung: **03.05.2017**
(21) Anmeldenummer: 14726976.5
(22) Anmeldetag: 27.05.2014
(51) Int. Cl.: H01M 8/18, H01M 8/04186, H01M 8/04276, H01M 8/0438, H01M 8/04746

(54) **DRUCKAUSGLEICHSSYSTEM MIT SICHERHEITSFUNKTION FÜR EINEN ELEKTROLYTTANK**
PRESSURE-EQUALISING SYSTEM WITH SAFETY FUNCTION FOR AN ELECTROLYTE TANK
SYSTÈME DE COMPENSATION DE PRESSION À FONCTION DE SÉCURITÉ POUR RÉSERVOIR D'ÉLECTROLYTE

(30) Priorität: 06.06.2013 AT 503742013
(43) Veröffentlichungstag der Anmeldung: 13.04.2016
(73) Patentinhaber: GILDEMEISTER energy storage GmbH, 2355 Wiener Neudorf (AT)
(72) Erfinder: HARRER, Martin, A-1040 Wien (AT); BINDER, Paul, 3430 Tulln (AT); PINZL, Michael, A-2540 Bad Vöslau (AT); WHITEHEAD, Adam, A-7000 Eisenstadt (AT)
(74) Vertreter: Patentanwälte Pinter & Weiss OG
(86) Internationale Anmeldenummer: PCT/EP2014/060984
(87) Internationale Veröffentlichungsnummer: WO 2014/195191

(56) Entgegenhaltungen:
- CN-A- 102 244 281
- CN-A- 102 386 427
- JP-A- 2001 093 560
- US-A1- 2003 022 059

## Beschreibung

Die Erfindung betrifft ein Druckausgleichssystem mit Sicherheitsfunktion für einen Elektrolyttank von Redox Durchflussbatterien, wobei ein Kopfbereich eines Elektrolyttanks mit der Umgebung der Durchflussbatterie über eine Rohrleitung in der ein primäres bidirektionales Druckausgleichsventil mit einem ersten Ansprechdruck angeordnet ist, verbunden ist. Redox-Durchflussbatterien bestehen bekannterweise aus Zellen, die von elektrisch unterschiedlich geladenen Elektrolyten durchströmt werden. Bei der Verwendung von Vanadium Redox Durchflussbatterien reagiert, im Zuge der Entladung, V²⁺ im negativen Elektrolyt zu V³⁺. Im selben Ausmaß reagiert V⁵⁺ im positiven Elektrolyt zu V⁴⁺. Dieser Vorgang ist der normale elektrochemische Vorgang in Folge der Entladung, wobei die Konzentrationen von V³⁺ im negativen Elektrolyt und V⁴⁺ im positiven Elektrolyt, unter normalen Umständen etwa gleich sind.

Bei Kontakt der negativen Elektrolytflüssigkeit solcher Vanadium Redox-Durchflussbatterien mit Sauerstoff reagiert V²⁺ im negativen Elektrolyt ebenfalls zu V³⁺. Dadurch kommt es zwischen dem negativen Elektrolyt und dem positiven Elektrolyt zu einem Ungleichgewicht, was in der Praxis zu einer Reduzierung der zur Verfügung stehenden Kapazität führt.

Ein Wiederaufbereiten der Elektrolyte ist zwar möglich, jedoch aufwendig und mit entsprechenden Kosten verbunden. Aus diesem Grund befinden sich das Elektrolyt in einem geschlossenen Tank, wobei durch die geschlossene Bauweise des Elektrolyttanks sichergestellt wird, dass es zu keiner chemischen Reaktion mit dem Sauerstoff aus der umgebenden Luft kommt.

Infolge von Temperaturänderungen und Gasbildung beim Ladevorgang innerhalb der Durchflussbatterie besteht außerdem die Tendenz einer hohen Druckvariation innerhalb des geschlossenen Elektrolyttanks. Da aus nachvollziehbaren Gründen der Elektrolyttank nur in einem bestimmten Druckbereich sicher betrieben werden können, ist ein entsprechendes Ausgleichssystem vorzusehen, welches für die zuverlässige Funktion Sorge trägt.

In diesem Zusammenhang sieht die JP 2001093560A beispielsweise ein System vor, bei dem jener Bereich des Tanks, in welchem sich keine Elektrolytflüssigkeit befindet, mit einem Inertgas gefüllt wird. Die Inertgasfüllung wird über ein Druckregelventil auf einem konstanten Druck gehalten. Nachteilig dabei ist zu sehen, dass das Inertgas in regelmäßigen Abständen zu überprüfen und gegebenenfalls zu tauschen ist, was naturgemäß mit zusätzlichem Aufwand und Kosten verbunden ist.

Eine weitere Möglichkeit Druckschwankungen innerhalb des Elektrolyttanks auszugleichen und gleichzeitig zu verhindern, dass der Elektrolyt mit Luftsauerstoff in Kontakt kommt besteht darin, innerhalb der Tankstruktur elastischer Behälter anzuordnen. Ein solcher Aufbau wird beispielsweise in der US 7,220,515 BB oder der US 6,681,789 BA gezeigt. Die elastischen Behälter sind dabei oberhalb der im Tank gespeichert Flüssigkeit angeordnet und stehen über entsprechende Öffnungen direkt mit der Umgebungsluft in Kontakt. Je nach Druckniveau innerhalb des Elektrolyttanks sind die elastischen Behälter mehr oder weniger mit Umgebungsluft gefüllt. Beispielsweise wird bei Ansteigen des Druckniveaus das Volumen der elastischen Behälter verringert, wodurch folglich der Druck innerhalb des Elektrolyttanks, durch freiwerdendes Volumen, auf einem konstanten Level gehalten werden kann. Ein Nachteil besteht darin, dass abhängig vom möglichen Volumen der elastischen Behälter, nur eine gewisse Druckdifferenz ausgeglichen werden kann. Eine Sicherheitseinrichtung für jenen Fall, dass die Öffnung, über welche die elastischen Behälter mit der Umgebung in Verbindung stehen, verlegt beziehungsweise verstopft ist, ist nicht vorgesehen. Ein derartiges Blockieren des Hauptauslasses würde daher zu einem Ausfall des Druckausgleichssystems führen.

Die CN 102244281A zeigt eine indirekte Dichtanordnung, bei der der Tank einer Durchflussbatterie unter Verwendung einer Dichtflüssigkeit oder eines Dichtgases gegenüber der Umgebung abgeschlossen wird, so dass kein Luftsauerstoff innerhalb des Elektrolyttanks gelangt. Die Dichtflüssigkeit befindet sich dabei in der Senke einer Rohrleitung deren Formgebung einem waagerechten "S" entspricht. Diese Rohrleitung mündet einerseits in den Kopfbereich des Elektrolyttanks, andererseits direkt in die Umgebung. Der Nachteil der gezeigten Ausführung besteht darin, dass keinerlei Sicherheitseinrichtungen für den Fall einer Fehlfunktion, beispielsweise einer bereits angeführten Blockade der Rohrleitung, vorgesehen ist.

Die Aufgabe der vorliegenden Erfindung besteht darin, ein möglichst einfach aufgebautes bidirektionales Druckausgleichssystem für Elektrolyttanks von Durchflussbatterien auszubilden, das die sichere Funktion unter allen Umständen gewährleisten soll und welches weiters gewährleistet, dass die Elektrolytflüssigkeiten vom Sauerstoff der umgebenden Luft abgegrenzt werden.

Die Aufgabe wird gemäß der vorliegenden Erfindung bei einem Druckausgleichssystem der eingangs genannten Art dadurch gelöst, dass von der Rohrleitung eine Bypassleitung abzweigt, in der ein sekundäres bidirektionales Druckausgleichsventil mit einem zweiten Ansprechdruck der größer als der erste Ansprechdruck ist, angeordnet ist, und ein Ventilauslass des sekundären bidirektionalen Druckausgleichsventils sich innerhalb eines, den Elektrolyttank umgebenden, Gehäuses befindet. Dabei ist es unbedeutend an welcher Stelle der Rohrleitung die Bypassleitung abzweigt. Sollte beispielsweise der umgebungsseitige Hauptauslass des primären bidirektionalen Druckausgleichsventils infolge von Schnee, Laub, Verschmutzung, etc. oder anderen Einflüssen wie beispielsweise Vandalismus verlegt, beziehungsweise blockiert sein, gewährt das sekundäre bidirektionale Druckausgleichsventil, geschützt durch das umgebende Gehäuse, bei entsprechender Druckdifferenz dennoch das Entweichen des angestauten Gases.

Der Ansprechdruck, also der Wert für die erwähnte Druckdifferenz zwischen dem Kopfbereich der Elektolyttanks und der Umgebung, bei der der Abzug des gebildeten Gases über das sekundäre bidirektionale Druckausgleichsventil erfolgt, liegt erfindungsgemäß über dem Ansprechdruck bei welchem das primäre bidirektionale Druckausgleichsventil aktiviert wird und ist üblicherweise in Abhängigkeit der strukturellen Eigenschaften des Elektrolyttanks gewählt um deren Beschädigung zu vermeiden.

Da das innerhalb des Elektrolyttanks beim Laden gebildete Gas aufgrund des hohen Anteils an Wasserstoff entflammbar ist, ist am Hauptauslass in vorteilhafter Weise ein Flammenrückschlagventil angeordnet. Dadurch kann verhindert werden, dass im Falle einer Entflammung des entweichenden Gases die Flammen in den Inneren Bereich des Gehäuses zurückschlagen.

Vorteilhafter Weise ist im Bereich des Ventilauslasses des sekundären bidirektionalen Druckausgleichsventils ein Sensor zur Detektion von austretenden Gas angeordnet. Dies erlaubt eine Druckdifferenz zu erkennen, die so groß ist, dass das Gas den Weg über die Bypassrohrleitung und nicht über das primäre bidirektionale Druckausgleichsventil nehmen kann. Infolgedessen kann auf eine mögliche Fehlfunktion des primären bidirektionalen Druckausgleichsventils rückgeschlossen werden. Beispielsweise kann in weiterer Folge die Durchflussbatterie vom elektrischen Netz, der Photovoltaik- oder Windkraftanlage getrennt werden um die weitere Gasbildung im Zuge des Ladevorgangs zu stoppen. Dadurch könnte auch die Bildung einer kritischen Konzentration an Gas, innerhalb des den Elektrolyttank umgebenden, Gehäuses vermieden werden. Weiters ist eine entsprechende Ausgabe denkbar, die den Betreiber der Durchflussbatterie über die Fehlfunktion informiert und somit zu entsprechendem Handeln veranlasst.

Eine vorteilhafte Ausgestaltung der Erfindung sieht vor, dass das sekundäre bidirektionale Druckausgleichsventil durch eine U-förmige Bypassrohrleitung, welche mit einer gewissen Menge Dichtflüssigkeit gefüllt ist, ausgeführt ist und sich die Dichtflüssigkeit im druckausgeglichenen Zustand in der Senke der U-förmigen Bypassrohrleitung befindet. Dadurch lässt sich ein einfach aufgebautes Ventil, ohne der Verwendung wartungsanfälliger, beweglicher Mechanik realisieren, welches über die Menge der Dichtflüssigkeit einfach an verschiedene Ansprechdrücke anzupassen ist, wobei wiederum unbedeutend ist, an welcher Stelle der Rohrleitung die U-förmigen Bypassrohrleitung abzweigt.

In vorteilhafter Weise kann weiters vorgesehen sein, dass das primäre bidirektionale Druckausgleichsventil durch einen U-förmigen Rohrabschnitt der Rohrleitung die den Kopfbereich des Elektrolyttanks mit der Umgebung des Tankbereichs verbindet ausgeführt ist und sich im druckausgeglichenen Zustand eine Dichtflüssigkeit in der Senke des U-förmigen Rohrabschnitts befindet, wobei die vorteilhafte Wirkung analog zu jener des eben beschriebenen sekundären bidirektionalen Druckausgleichsventil ist.

In diesem Zusammenhang ist vorteilhaft vorgesehen, dass als Dichtflüssigkeit eine Flüssigkeit mit geringen Verdunstungsgrad wie beispielsweise Mineralöl oder Paraffinöl vorgesehen ist. Dadurch kann Ansprechdruck, beziehungsweise die erwähnte Druckdifferenz ab welcher es zum Druckausgleich kommt, annähernd konstant gehalten werden, da es zu keinen erheblichen Schwund der Dichtflüssigkeit infolge von Verdunstung kommt.

In einer weiteren Vorteilhaften Ausgestaltung ist vorgesehen, dass als Dichtflüssigkeit eine antistatische Flüssigkeit genutzt wird, oder die Dichtflüssigkeit mit einem Antistatikadditiv versetzt wird.

In weiterer vorteilhafter Weise wird ein akustischer Sensor an der U-förmigen Bypassrohrleitung angeordnet. Passieren Gasblasen die, in der U-förmigen Bypassrohrleitung befindliche, Dichtflüssigkeit, wird ein charakteristisches akustisches Signal erzeugt, welches durch den akustischen Sensor detektiert wird. Wieder kann infolgedessen auf eine mögliche Blockade oder Fehlfunktion des primären bidirektionalen Druckausgleichsventils geschlossen werden.

Um das Füllen und die Wartung zu erleichtern, sind der U-förmige Rohrabschnitt und/oder die U-förmigen Bypassrohrleitung in vorteilhafter Weise transparent oder durchscheinend ausgeführt.

In einer ganz ähnlichen vorteilhaften Ausgestaltung wird anstelle oder neben dem akustischen Sensor, ein optischer Sensor an der U-förmigen Bypassrohrleitung angeordnet, wobei diese transparent oder durchscheinend ausgeführt ist. Sobald Gasblasen die, in der U-förmigen Bypassrohrleitung befindliche, Dichtflüssigkeit passieren, kommt es zu einer momentanen Änderung des optischen Signals. Diese Änderung ist als Hinweis darauf zu sehen, dass das primäre bidirektionale Druckausgleichsventil nicht ordnungsgemäß funktioniert.

Eine weitere vorteilhafte Ausgestaltung sieht vor, dass zwischen Ein- und Auslassseite des primären bidirektionalen Druckausgleichsventils ein Spülventil vorgesehen ist. Dies erlaubt, beispielsweise beim Spülen mit einem Spülgas zu Servicezwecken, eine höhere Gasflussrate als sie durch das primäre bidirektionale Druckausgleichsventil möglich wäre.

Um die Lebensdauer des Druckausgleichssystems zu erhöhen, ist in vorteilhafter Weise vorgesehen, dass der U-förmigen Rohrabschnitts und die Bypassleitung aus, gegenüber den Elektrolytflüssigkeiten, chemisch resistenten Material ausgeführt sind, da sich innerhalb des gebildeten Gases durchaus Elektrolytflüssigkeit in Form von Tröpfchen befinden kann.

Eine vorteilhafte Ausgestaltung der Erfindung beinhaltet, dass eine Einrichtung zur Erdung vorgesehen ist, welche in elektrischen Kontakt mit den Dichtflüssigkeiten steht. Diese erlaubt es, das Risiko der statischen Aufladung zu minimieren.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig. 1 den schematischen Aufbau des Tankbereichs einer Durchflussbatterie mit einem erfindungsgemäßen Druckausgleichssystem mit Sicherheitsfunktion,
Fig. 2 den schematischen Aufbau des Tankbereichs einer Durchflussbatterie mit einem erfindungsgemäßen Druckausgleichssystem mit Sicherheitsfunktion in einer besonders vorteilhaften Ausgestaltung und
Fig. 3 den schematischen Aufbau des Druckausgleichssystems in einer weiteren Anordnungsvariante.

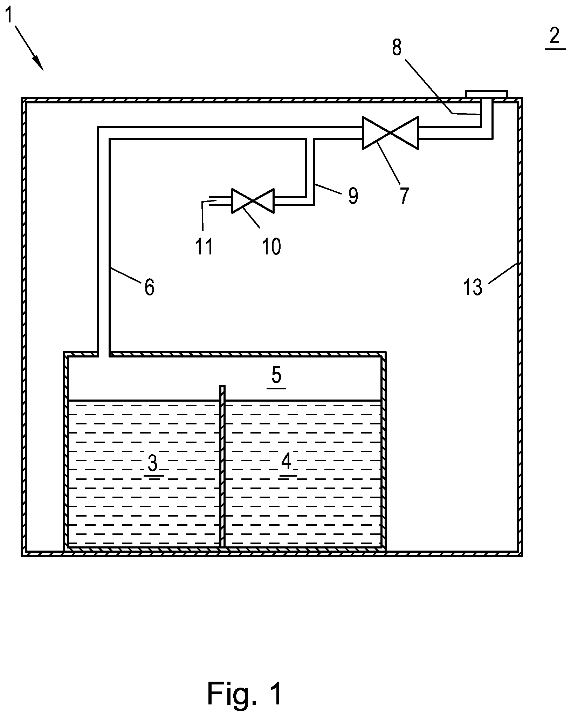

In Figur 1 ist der schematische Aufbau des erfindungsgemäßen Tankbereichs 1 einer Durchflussbatterie dargestellt bei dem die beiden Elektolyttanks 3 und 4 einen gemeinsamen Kopfbereich 5 aufweisen, jedoch ist auch eine Bauform bei der jeder der zwei Elektrolyttanks 3 und 4 einen eigenen, darüberliegenden Kopfbereich 5 aufweist, denkbar, wobei in diesem Fall jeder Kopfbereich mit dem erfindungsgemäßen Druckausgleichssystem verbunden ist.

In weiterer Folge wird ohne einschränkende Wirkung nur noch ein gemeinsamer Kopfbereich 5 erwähnt.

Im gemeinsamen Kopfbereich 5 der beiden Elektrolyttanks 3 und 4 sammelt sich das, beispielsweise durch Erwärmung entstandene, Gas. Über eine Rohrleitung 6 und das primäre bidirektionale Druckausgleichsventil 7 kann das entstandene Gas bei entsprechender Druckdifferenz über den Hauptauslass 8 im Gehäuse 13 in die Umgebung entweichen. An der Rohrleitung 6 zweigt des Weiteren eine Bypassrohrleitung 9 mit einem sekundären bidirektionalen Druckausgleichsventil 10 ab.

Bei Ansteigen des Druckes im Kopfbereich 5 durch verstärkte Gasentwicklung, beispielsweise durch betriebsbedingte Erwärmung kann das angestaute Gas über den umgebungsseitigen Hauptauslass 8 des primären bidirektionalen Druckausgleichsventils 7 in die Umgebung 2 entweichen. Der Ansprechdruck des primären bidirektionalen Druckausgleichsventils, also die notwendige Druckdifferenz zwischen Kopfbereich 5 und Umgebung 2, ist von der Einstellung beziehungsweise der Dimensionierung des primären bidirektionalen Druckausgleichsventils 7 abhängig.

Ist das primäre bidirektionale Druckausgleichsventil 7, beispielsweise infolge einer Blockade des umgebungsseitigen Hauptauslasses 8 nicht funktionstüchtig, steigt die Druckdifferenz zwischen Kopfbereich 5 und primären bidirektionalen Druckausgleichsventil 7, infolge der anhaltenden Gasentwicklung, weiter an. Erreicht die Druckdifferenz eine entsprechende Höhe, nämlich den Ansprechdruck des sekundären bidirektionalen Druckausgleichsventils 10, erfolgt der Abzug des Gases über das sekundäre bidirektionale Druckausgleichsventil 10, wobei das Gas über den Ventilauslass 11, welcher sich erfindungsgemäß innerhalb des, die Elektrolyttanks 3 und 4 umgebenden Gehäuses 13 befindet, entweicht. Die Höhe des Ansprechdrucks bei der der Abzug des Gases über das sekundäre bidirektionale Druckausgleichsventil 10 erfolgt, liegt oberhalb jener Druckdifferenz bei der im Normalbetrieb das primäre bidirektionale Druckausgleichsventil 7 ein Entweichen des Gases über den umgebungsseitigen Hauptauslass 8 zulässt und ist üblicherweise von den strukturellen Eigenschaften der Elektrolyttanks 3 und 4 abhängig. Dadurch, dass der Ansprechdruck des sekundären bidirektionalen Druckausgleichsventils 10 über dem des primären bidirektionalen Druckausgleichsventils 7 liegt, wird somit sichergestellt, dass der Druckausgleich im Normalbetrieb ausschließlich über das primäre bidirektionale Druckausgleichsventil 7 erfolgt.

Da die beschriebene Wirkungsweise bidirektional ist, kann auf selbige Weise auch ein Unterdruck im Kopfbereich 5, zu welchen es infolge atmosphärischer Veränderungen kommen könnte, ausgeglichen werden.

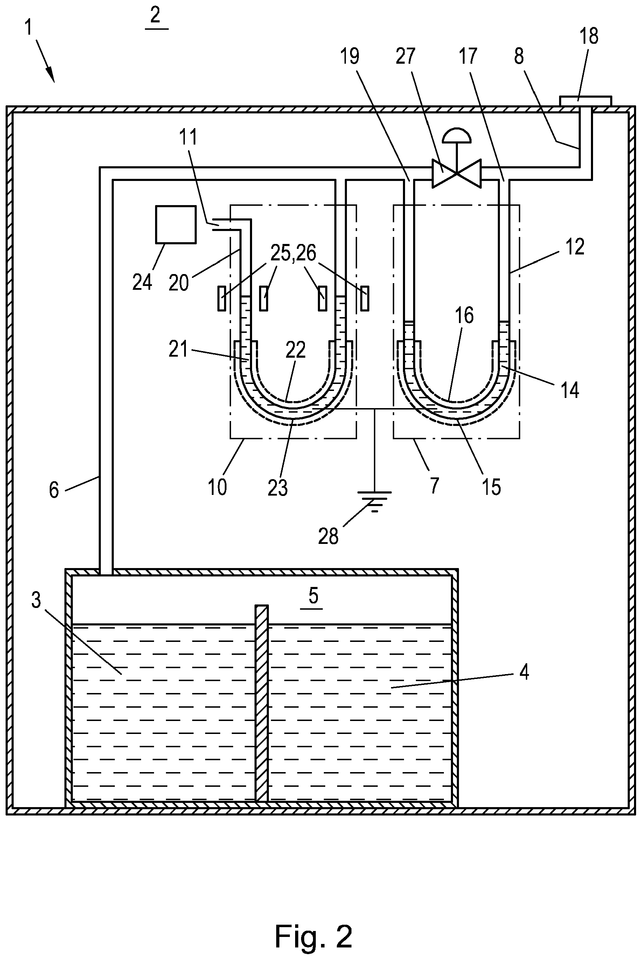

Fig. 2 zeigt den eben beschriebenen erfindungsgemäßen Tankbereichs 1 einer Durchflussbatterie in einer besonders vorteilhaften Ausgestaltung.

Dabei ist das primäre bidirektionale Druckausgleichsventil 7 durch einen U-förmigen Rohrabschnitt 12 der Rohrleitung 6 die den Kopfbereich 5 der Elektrolyttanks 3 und 4 mit der Umgebung 2 des Tankbereichs 1 verbindet ausgeführt. Im druckausgeglichenen Zustand befindet sich eine Dichtflüssigkeit 14 in der Senke 16 dieses U-förmigen Rohrabschnitts 12.

Durch das Ansteigen des Druckes im Kopfbereich 5 der beiden Elektrolyttanks 3 und 4 infolge verstärkter Gasentwicklung, beispielsweise durch betriebsbedingte Erwärmung, wird die Dichtflüssigkeit 14 innerhalb des U-förmigen Rohrabschnitts 12 in Richtung der Auslassseite 17 verschoben. Sobald der Ansprechdruck des primären bidirektionalen Druckausgleichsventils 7 erreicht ist, also die Druckdifferenz ausreicht um die Dichtflüssigkeit 14 vollständig oberhalb des unteren Totpunkts 15 des U-förmigen Rohrabschnitts 12 zu drücken, kann das aufgestaute Gas in Form einzelner aufsteigender Gasblasen durch die den U-förmigen Rohrabschnitts 12, die darin enthaltenen Dichtflüssigkeit 14 und letztendlich über die Auslassseite 17 durch den umgebungsseitigen Hauptauslass 8 und das Flammenrückschlagventil 18 entweichen, wodurch die entstandene Druckdifferenz sukzessive verringert wird. Der Vorgang des Entweichens hält genau so lange an, bis sich, infolge der sich reduzierenden Druckdifferenz, die Dichtflüssigkeit 14 wieder in den Bereich des unteren Totpunkts 15 des U-förmigen Rohrabschnitts 12 bewegt.

Da die beschriebene Wirkungsweise bidirektional ist, kann auf selbige Weise auch ein Unterdruck im Kopfbereich 5, zu welchen es in seltenen Fällen kommen könnte, ausgeglichen werden. Dabei verschiebt sich die Dichtflüssigkeit 14 innerhalb des U-förmigen Rohrabschnitts 12 jedoch in Richtung des tankseitigen Einlasses 19 des U-förmigen Rohrabschnitts 12. In gleicher Weise wie bereits beschrieben kann daher, sobald die Dichtflüssigkeit 14 vollständig oberhalb des unteren Totpunkts 15 des U-förmigen Rohrabschnitts 12 befindet, Umgebungsluft in Form einzelner Gasblasen durch den U-förmigen Rohrabschnitt 12 und der darin enthaltenen Dichtflüssigkeit 14 angesaugt werden wodurch wiederum die entstandene Druckdifferenz verringert wird. Wie auch beim Abbau von Überdruck hält der Vorgang des Ansaugens bei Unterdruck genau so lange an, bis sich, infolge der sich reduzierenden Druckdifferenz, die Dichtflüssigkeit 14 wieder in den Bereich des unteren Totpunkts 15 des U-förmigen Rohrabschnitts 12 bewegt.

Der Ansprechdruck, also die erwähnte Druckdifferenz zwischen Kopfbereich 5 und Umgebung 2, die notwendig ist, um die Dichtflüssigkeit 14 vollständig oberhalb des unteren Totpunkts 15 des U-förmigen Rohrabschnitts 12 zu drücken, ist von der Dimensionierung des U-förmigen Rohrabschnitts 12, der Art der Dichtflüssigkeit 14 und deren Menge abhängig und kann so, einfach eingestellt werden.

In gleicher Weise ist das sekundäre bidirektionale Druckausgleichsventil 10 in Form einer U-förmigen Bypassrohrleitung 20 mit Dichtflüssigkeit 21 die sich im druckausgeglichenen Zustand in der Senke 22 der U-förmigen Bypassrohrleitung 20 befindet, ausgeführt. Beispielhaft ist die U-förmigen Bypassrohrleitung 20 Tankseitig vom U-förmigen Rohrabschnitts 12 dargestellt.

Ist das primäre bidirektionale Druckausgleichsventil 7, beispielsweise infolge einer Blockade des umgebungsseitigen Hauptauslasses 8 nicht funktionstüchtig, steigt die Druckdifferenz zwischen Kopfbereich 5 der beiden Elektrolyttanks 3 und 4 und primären bidirektionalen Druckausgleichsventil 7, infolge der anhaltenden Gasentwicklung, weiter an bis der Ansprechdruck des sekundären bidirektionalen Druckausgleichsventils 10 erreicht ist. Wie eben für das primäre bidirektionale Druckausgleichsventil 7 beschrieben, wird dadurch in gleicher Weise die Dichtflüssigkeit 21 innerhalb der U-förmigen Bypassrohrleitung 21 verschoben. Sobald sich die Dichtflüssigkeit 21 vollständig oberhalb des unteren Totpunkts 23 der U-förmigen Bypassrohrleitung 20 befindet, kann das aufgestaute Gas in Form einzelner Gasblasen durch die U-förmigen Bypassrohrleitung 20 und der darin enthaltenen Dichtflüssigkeit 21 und folglich über den Ventilauslass 11, welcher sich erfindungsgemäß innerhalb des die Elektrolyttanks 3 und 4 umgebenden Gehäuses 13 befindet, entweichen. Wie auch für das primäre bidirektionale Druckausgleichsventil 7 beschrieben, hält der Vorgang des Entweichens genau so lange an, bis sich, infolge der sich reduzierenden Druckdifferenz, die Dichtflüssigkeit 21 wieder in den Bereich des unteren Totpunkts 23 der U-förmigen Bypassrohrleitung 20 bewegt.

Der im Bereich des Ventilauslasses 11 angeordnete Sensor 24 detektiert einen etwaigen Austritt von Gas über die U-förmigen Bypassrohrleitung 20. Da dadurch auf eine mögliche Fehlfunktion des primären bidirektionalen Druckausgleichsventils 7 rückgeschlossen werden kann, kann beispielsweise die Durchflussbatterie vom elektrischen Netz, der Photovoltaik- oder Windkraftanlage getrennt werden um die weitere Gasbildung im Zuge des Ladevorgangs zu stoppen und/oder der Betreiber der Durchflussbatterie durch eine entsprechende Ausgabe über die Fehlfunktion informiert werden.

Des Weiteren können akustische Sensoren 25 und/oder optische Sensoren 26 an der U-förmigen Bypassrohrleitung 20 angeordnet sein, die das Verschieben der Dichtflüssigkeit 21, beziehungsweise das Passieren von Gasblasen detektieren.

Wie auch für das primäre bidirektionale Druckausgleichsventil 7 ist die Höhe der notwendigen Druckdifferenz beziehungsweise die Höhe des Ansprechdrucks von der Dimensionierung der U-förmigen Bypassrohrleitung 20, der Art der Dichtflüssigkeit 21 und deren Menge abhängig, wobei die notwendige Druckdifferenz zur Aktivierung des sekundären bidirektionalen Druckausgleichsventils 10 wie bereits beschrieben, höher liegt als für das primäre bidirektionale Druckausgleichsventil 7. Die Höhe der notwendigen Druckdifferenz zur Aktivierung des sekundären bidirektionalen Druckausgleichsventils 10 kann wie ebenfalls bereits beschrieben, von den strukturellen Eigenschaften der Elektrolyttanks 3 und 4 abhängig gemacht werden.

Auch die bidirektionale Wirkung und die damit verbundene Funktionsweise ist analog zu jener des primären bidirektionalen Druckausgleichsventils 7.

Zwischen Einlassseite 19 und Auslassseite 17 des primären bidirektionalen Druckausgleichsventils 7 kann ein Spülventil 27 vorgesehen. Im Normalbetrieb ist das Spülventil 27 geschlossen und das entstandene Gas nimmt, wie beschrieben, bei ausreichender Druckdifferenz den Weg durch das primäre bidirektionale Druckausgleichsventil 7 beziehungsweise die darin enthaltene Dichtflüssigkeit 14. Das Spülventil 27 erlaubt im geöffneten Zustand das Spülen mit einem Spülgas zu Servicezwecken mit einer höheren Gasflussrate als sie durch das primäre bidirektionale Druckausgleichsventil 7 möglich wäre.

Durch eine Erdung der Dichtflüssigkeiten 14 und 21 mithilfe der Einrichtung 28 kann sichergestellt werden, dass das Risiko der statischen Aufladung auf ein Minimum reduziert wird. Dieses Risiko kann natürlich auch durch die Verwendung von antistatischen Dichtflüssigkeiten, beziehungsweise dem Beimengen eines Antistatikadditivs zu den Dichtflüssigkeiten 14 und 21, minimiert werden.

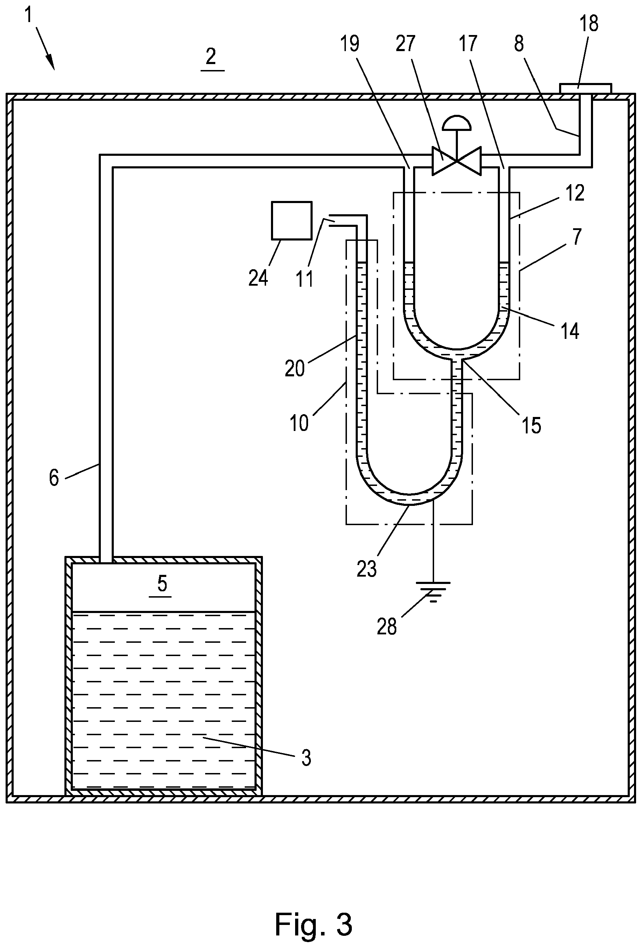

Fig. 3 zeigt den schematischen Aufbau des Druckausgleichssystems in einer weiteren Anordnungsvariante bei welcher lediglich ein Elektrolyttank 3 angeordnet ist und die U-förmigen Bypassrohrleitung 20 vom unteren Totpunkt 15 des U-förmigen Rohrabschnitts 12 der Rohrleitung 6 abzweigt.

Das Verhältnis zwischen ersten Ansprechdruck des primären bidirektionalen Druckausgleichsventils 7 und zweiten Ansprechdruck des sekundären bidirektionalen Druckausgleichsventils 10 ist von deren Anordnung beziehungsweise deren Lage zueinander abhängig. Ansonsten ist die Funktion identisch zur Ausführung in Fig. 2.

## Patentansprüche

1. Druckausgleichssystem mit Sicherheitsfunktion für einen Elektrolyttank von Redox Durchflussbatterien, wobei ein Kopfbereich (5) eines Elektrolyttanks (3, 4) mit der Umgebung (2) der Durchflussbatterie über eine Rohrleitung (6) in der ein primäres bidirektionales Druckausgleichsventil (7) mit einem ersten Ansprechdruck angeordnet ist, verbunden ist, **dadurch gekennzeichnet, dass** von der Rohrleitung (6) eine Bypassleitung (9, 20) abzweigt, in der ein sekundäres bidirektionales Druckausgleichsventil (10) mit einem zweiten Ansprechdruck, der größer als der erste Ansprechdruck ist, angeordnet ist, und ein Ventilauslass (11) des sekundären bidirektionalen Druckausgleichsventils (10) sich innerhalb eines, den Elektrolyttank (3, 4) umgebenden, Gehäuses (13) befindet.

2. Druckausgleichssystem nach Anspruch 1, **dadurch gekennzeichnet, dass** am Hauptauslass (8) ein Flammenrückschlagventil (18) angeordnet ist.

3. Druckausgleichssystem nach Anspruch 1 oder 2, **dadurch gekennzeichnet, dass** im Bereich des Ventilauslasses (11) des sekundären bidirektionalen Druckausgleichsventils (10) ein Sensor (24) zur Detektion von austretendem Gas angeordnet ist.

4. Druckausgleichssystem nach einem der Ansprüche 1 bis 3, **dadurch gekennzeichnet, dass** das sekundäre bidirektionale Druckausgleichsventil (10) durch eine U-förmige Bypassrohrleitung (20) welche mit einer gewissen Menge Dichtflüssigkeit (21) gefüllt ist, ausgeführt ist und sich die Dichtflüssigkeit (21) im druckausgeglichenen Zustand in der Senke (22) der U-förmigen Bypassrohrleitung (20) befindet.

5. Druckausgleichssystem nach einem der Ansprüche 1 bis 4, **dadurch gekennzeichnet, dass** das primäre bidirektionale Druckausgleichsventil (7) durch einen U-förmigen Rohrabschnitt (12) der Rohrleitung (6) die den Kopfbereich (5) der Elektrolyttanks (3, 4) mit der Umgebung (2) eines Tankbereichs (1) verbindet ausgeführt ist und sich im druckausgeglichenen Zustand eine Dichtflüssigkeit (14) in der Senke (16) des U-förmigen Rohrabschnitts (12) befindet.

6. Druckausgleichssystem nach den Ansprüchen 4 und 5 , **dadurch gekennzeichnet, dass** als Dichtflüssigkeit (14, 21) eine Flüssigkeit mit geringem Verdunstungsgrad vorgesehen ist.

7. Druckausgleichssystem nach einem der Ansprüche 4 bis 6, **dadurch gekennzeichnet, dass** als Dichtflüssigkeit (14, 21) eine antistatische Flüssigkeit genutzt wird, oder die Dichtflüssigkeit (14, 21) mit einem Antistatikadditiv versetzt wird.

8. Druckausgleichssystem nach einem der Ansprüche 4 bis 7, **dadurch gekennzeichnet, dass** ein akustischer Sensor (25) an der U-förmigen Bypassrohrleitung (20) angeordnet ist.

9. Druckausgleichssystem nach einem der Ansprüche 4 bis 8, **dadurch gekennzeichnet, dass** der U-förmigen Rohrabschnitt (12) und/oder die U-förmigen Bypassrohrleitung (20) transparent oder durchscheinend ausgeführt ist.

10. Druckausgleichssystem nach einem der Ansprüche 4 bis 8, **dadurch gekennzeichnet, dass** ein optischer Sensor (26) an der U-förmigen Bypassrohrleitung (20) angeordnet ist und die U-förmigen Bypassrohrleitung (20) transparent oder durchscheinend ausgeführt ist.

11. Druckausgleichssystem nach einem der Ansprüche 1 bis 10 **dadurch gekennzeichnet, dass** zwischen Einlasseite (19) und Auslassseite (17) des primären bidirektionalen Druckausgleichsventils (7) ein Spülventil (27) vorgesehen ist.

12. Druckausgleichssystem nach einem der Ansprüche 5 bis 11, **dadurch gekennzeichnet, dass** der U-förmigen Rohrabschnitt (12) und die Bypassleitung (9, 20) aus, gegenüber der Elektrolytflüssigkeit im Elektrolyttank (3, 4), chemisch resistenten Material ausgeführt sind.

13. Druckausgleichssystem nach einem der Ansprüche 4 bis 9, **dadurch gekennzeichnet, dass** eine Einrichtung (28) zur Erdung vorgesehen ist, welche in elektrischen Kontakt mit der Dichtflüssigkeit (14, 21) steht.

## Claims

1. A pressure compensation system having a safety function for an electrolytic tank of redox flow batteries, wherein a head portion (5) of an electrolytic tank (3, 4) is connected with the surrounding area (2) of the flow battery via a pipeline (6) in which a primary bi-directional pressure compensation valve (7) having a first response pressure is situated, **characterized in that** a bypass line (9, 20), in which a secondary bi-directional pressure compensation valve (10) having a second response pressure, which is greater than the first response pressure, is situated, branches off from the pipeline (6) and a valve outlet (11) of the secondary bi-directional pressure compensation valve (10) is located within a housing (13) surrounding the electrolytic tank (3, 4).

2. The pressure compensation system according to Claim 1, **characterized in that** a flashback valve (18) is situated at a main outlet (8).

3. The pressure compensation system according to Claim 1 or 2, **characterized in that** a sensor (24) is located in the area of the valve outlet (11) of the secondary bi-directional pressure compensation valve (10) for detecting escaping gas.

4. The pressure compensation system according to one of Claims 1 through 3, **characterized in that** the secondary bi-directional pressure compensation valve (10) is formed by a U-shaped bypass line (20) filled with a certain amount of seal liquid (21) and the seal liquid (21) is disposed in the pressure balanced state in the sink (22) of the U-shaped bypass line (20).

5. The pressure compensation system according to one of Claims 1 through 4, **characterized in that** the primary bi-directional pressure compensation valve (7) is formed by a U-shaped pipe section (12) of the pipeline (6) which connects the head portion (5) of the electrolytic tanks (3, 4) with the surrounding area (2) of a tank area (1) and a seal liquid (14) is situated in the pressure balanced state in the sink (16) of the U-shaped pipe section (12).

6. The pressure compensation system according to Claims 4 and 5, **characterized in that** the seal liquid (14, 21) is provided with a liquid having a reduced evaporation rate.

7. The pressure compensation system according to one of Claims 4 through 6, **characterized in that** an anti-static liquid is used as seal liquid (14, 21) or that an anti-static additive is added to the seal liquid (14, 21).

8. The pressure compensation system according to one of Claims 4 through 7, **characterized in that** an acoustic sensor (25) is disposed at the U-shaped bypass line (20).

9. The pressure compensation system according to one of Claims 4 through 8, **characterized in that** the U-shaped pipe section (12) and/or the U-shaped bypass line (20) is/are designed in a transparent or translucent manner.

10. The pressure compensation system according to one of Claims 4 through 8, **characterized in that** an optical sensor (26) is disposed at the U-shaped bypass line (20) and the U-shaped bypass line (20) is designed in a transparent or translucent manner.

11. The pressure compensation system according to one of Claims 1 through 10, **characterized in that** a flushing valve (27) is provided between inlet side (19) and outlet side (17) of the primary pressure compensation valve (7).

12. The pressure compensation system according to one of Claims 5 through 11, **characterized in that** the U-shaped pipe section (12) and the bypass line (9, 20) are made out of chemically resistant material vis-à-vis the electrolytic fluid in the electrolytic tank (3, 4).

13. The pressure compensation system according to one of Claims 4 through 9, **characterized in that** a device (28) for grounding is provided which is in electrical contact with the seal liquid (14, 21).

## Revendications

1. Système de compensation de pression à fonction de sécurité pour un réservoir d'électrolyte de batteries à circulation redox, dans lequel une zone de tête (5) d'un réservoir d'électrolyte (3, 4) est reliée à l'environnement (2) de la batterie à circulation par le biais d'une conduite (6) dans laquelle une soupape de compensation de pression bidirectionnelle primaire (7) est agencée avec une première pression de réponse, **caractérisé en ce qu'**une conduite de dérivation (9, 20) se ramifie à partir de la conduite (6), dans laquelle une soupape de compensation de pression bidirectionnelle secondaire (10) est agencée avec une deuxième pression de réponse, qui est supérieure à la première pression de réponse, et une sortie de soupape (11) de la soupape de compensation de pression bidirectionnelle secondaire (10) se trouve à l'intérieur d'un boîtier (13) entourant le réservoir d'électrolyte (3, 4).

2. Système de compensation de pression selon la revendication 1, **caractérisé en ce qu'**un clapet anti-retour de flamme (18) est agencé au niveau de la sortie principale (8).

3. Système de compensation de pression selon la revendication 1 ou 2, **caractérisé en ce qu'**un capteur (24) de détection de gaz sortant est agencé au niveau de la sortie de soupape (11) de la soupape de compensation de pression bidirectionnelle secondaire (10).

4. Système de compensation de pression selon l'une quelconque des revendications 1 à 3, **caractérisé en ce que** la soupape de compensation de pression bidirectionnelle secondaire (10) est réalisée par une conduite de dérivation en forme de U (20), laquelle est remplie d'une certaine quantité de fluide d'étanchéité (21), et le fluide d'étanchéité (21) se trouve à l'état compensé en pression dans la cuvette (22) de la conduite de dérivation en forme de U (20).

5. Système de compensation de pression selon l'une quelconque des revendications 1 à 4, **caractérisé en ce que** la soupape de compensation de pression bidirectionnelle primaire (7) est réalisée par une section de tuyau en forme de U (12) de la conduite (6) qui relie la zone de tête (5) du réservoir d'électrolyte (3, 4) à l'environnement (2) d'une zone de réservoir (1), et un fluide d'étanchéité (14) se trouve à l'état compensé en pression dans la cuvette (16) de la section de tuyau en forme de U (12).

6. Système de compensation de pression selon les revendications 4 et 5, **caractérisé en ce qu'**un fluide à faible niveau d'évaporation est prévu comme fluide d'étanchéité (14, 21).

7. Système de compensation de pression selon l'une quelconque des revendications 4 à 6, **caractérisé en ce qu'**un fluide antistatique est utilisé comme fluide d'étanchéité (14, 21), ou le fluide d'étanchéité (14, 21) est mélangé avec un additif antistatique.

8. Système de compensation de pression selon l'une quelconque des revendications 4 à 7, **caractérisé en ce qu'**un capteur acoustique (25) est agencé au niveau de la conduite de dérivation en forme de U (20).

9. Système de compensation de pression selon l'une quelconque des revendications 4 à 8, **caractérisé en ce que** la section de tuyau en forme de U (12) et/ou la conduite de dérivation en forme de U (20) est réalisée de manière transparente ou translucide.

10. Système de compensation de pression selon l'une quelconque des revendications 4 à 8, **caractérisé en ce qu'**un capteur optique (26) est agencé au niveau de la conduite de dérivation en forme de U (20), et la conduite de dérivation en forme de U (20) est réalisée de manière transparente ou translucide.

11. Système de compensation de pression selon l'une quelconque des revendications 1 à 10, **caractérisé en ce qu'**une soupape de rinçage (27) est prévue entre le côté entrée (19) et le côté sortie (17) de la soupape de compensation de pression bidirectionnelle primaire (7).

12. Système de compensation de pression selon l'une quelconque des revendications 5 à 11, **caractérisé en ce que** la section de tuyau en forme de U (12) et la conduite de dérivation (9, 20) sont réalisées en matériau chimiquement résistant par rapport au fluide d'électrolyte dans le réservoir d'électrolyte (3, 4).

13. Système de compensation de pression selon l'une quelconque des revendications 4 à 9, **caractérisé en ce qu'**un équipement (28) de mise à la terre est prévu, lequel est en contact électrique avec le fluide d'étanchéité (14, 21).
